# EUROPEAN PATENT APPLICATION

(11) **EP 2 755 265 A1**
(43) Date of publication of application: **16.07.2014**
(21) Application number: 13150645.3
(22) Date of filing: 09.01.2013
(51) Int. Cl.: H01M 4/88

(54) **Thermodynamically stable binary oxide doped with lower valence element, its synthesis and application in electrochemical devices**

(71) Applicant: Paul Scherrer Institut, 5232 Villigen (CH)
(72) Inventor: Fabbri, Emiliana, 5200 Brugg AG (CH); Kötz, Rüdiger, 5316 Gippingen (CH); Rabis, Annett, 8902 Urdorf (CH); Schmidt, Thomas Justus, 5303 Würenlingen (CH)
(74) Representative: Fischer, Michael

(57) **Abstract**

It is the aim of the present invention to provide a support material for applications in fuel cell, metal-air battery, electrolyzer electrodes and sensors showing relative high surface area and good electrical conductivity as well as both high dissolution and electrochemical stability.

This aim is achieved according to the present invention by a support material for electrochemical applications, such as fuel cells, metal-air batteries, electrolyzer electrodes and sensors, having a composition of a semiconducting metal or transition metal oxide being doped with a lower valence element according to a general formula that is formulated as:
(M^{Y})_{1-X}(D^{z})ₓO_{2-δ}, where M is a metal or transition metal in Y oxidation state and D represents the lower valence element with an oxidation state with Z<Y and δ represents the oxygen vacancies in the lattice and at the surface of the support material.

Doped metal or transition metal oxides represent best candidates as support materials because they provide both dissolution and electrochemical stability under the relevant conditions of oxygen electrode, as well as achieve high conductivity and high surface area.

## Description

The invention relates to the use of novel, corrosion resistant oxide-based electrode materials for application in fuel cells, metal-air batteries, electrolyzer, and sensors. Particularly, transition metal or metal oxides in their highest oxidation state can provide high electrochemical stability, as well as high surface area when produced by wet chemical synthesis methods.

High surface area carbons are commonly used both for anode and cathode electrodes in fuel cells, electrolyzers, and metal-air batteries. Particularly, in polymer electrolyte fuel cells (PEFCs) carbon is used as support electrode material for Pt or Pt-alloy catalysts, within the gas-diffusion layer, and as a bipolar plate material. However, despite its widespread use, carbon does not represent a stable support since it undergoes to electrochemical oxidation under operating fuel cell conditions.

Surface oxidation of the carbon support leads to an increase of the carbon hydrophilicity, which causes large mass transport overpotentials in a fuel cell system, and thereby a significant decrease of the performance. An even more severe degradation is caused by carbon oxidation reaction (COR), described by Equ. 1, which leads to an extended carbon corrosion and loss of the surface area.

Equ. 1 *C* + 2*H*₂*O → CO*₂ + 4*e⁻* + 4*H*⁺

vs Eₒ=0.206 V_{NHE} at 25°C

Even though COR can thermodynamically occur at potentials as low as 0.206 V vs NHE, due to the sluggish kinetics of this reaction, carbon corrosion represents a severe drawback only for systems operating above 0.7 V.

Regarding fuel cell systems developed for automotive applications, it has been estimated that during a fuel cell lifetime (approximately 5000 h) at least 300.000 cycles between 0.7 and 0.9 V will be performed (The Electrochemical Society Interface 2005, 14, 24-35). Furthermore, during the start/stop cycles the cathode can even reach potentials up to 1.5 V (Schmidt, T. J. In Polymer Electrolyte Fuel Cell Durability; Eds.; Springer: New York, 2009, p 199-221). Therefore, under real fuel cell operative conditions carbon oxidation can significantly reduce the system performance since it leads to a drastic loss of the support surface area and, as a consequence, of the electrical connection of the Pt particles. Complete deterioration of the carbon would finally lead to a collapse of the structural integrity of the cathode. A recent investigation (J. Phys. Chem. C 2011, 115, 14236) reported that after 1000 start/stop cycles, the porosity of a carbon/Pt catalyst layer is reduced from 40% to 5%, with a decrease of the Pt surface area of about 85%. Corrosion stability of the oxygen electrode is therefore one of the main issue to solve in order to speed up a widespread fuel cell market penetration.

In the search of more stable support materials than high surface area carbon blacks, attempts have been made to increase the degree of graphitization of the carbon support. However, even though graphitized carbon shows higher corrosion stability than high surface area carbon black, the corrosion issue is only kinetically delayed and not solved.

As a consequence, several attempts have been made in order to replace carbon-based supports by other potentially more stable materials, *e.g.,* carbides, nitrides and oxides. However, carbides or nitrates will all be again thermodynamically driven to oxidation and formation of the respective oxides under the high oxidative conditions of a fuel cell cathode. Therefore, these two classes of compounds do not provide a better alternative to carbon-based supports. For example, tungsten carbide (WC) has been widely investigated as catalyst support due to its high electronic conductivities and thermal stability. However, WC does not provide adequate corrosion stability since some authors reported the formation of tungsten oxides only after 50 potential cycles between 0 and 1.0 V vs NHE (J. Phys. Chem. C 111, 2007,14617). Furthermore, since the synthesis of carbides is mainly through high temperature carbidization processes, this class of materials cannot provide the required specific surface area for a support material.

Indeed, for fuel cell application a good catalyst support should provide both adequate stability as well as high surface in order to reduce the loading of noble metal catalysts.

Therefore, the most successful approach in developing a high surface area and corrosion resistant support appears to be the use of transition metal or metal oxides. In fact, this class of materials can achieve high electrochemical stability when used in their highest oxidation state, as well as high surface area when produced by wet chemical synthesis methods.

Apart from being resistant towards corrosion and showing large surface area, a catalyst support must also present adequate electronic conductivity to electrically connect the catalyst particles and must be able to form a porous structure.

Further requisite for application as support material in PEFC cathodes is the (electro)chemical stability under acidic environment and up to 80°C. A recent publication (ECS Trans. 2010, 33, 473) showed that besides the oxides from the noble metal group (RuO₂, IrO₂, PdO₂) only nine binary oxides are stable at pH=0, T=80°C and applied potential of 1 V vs SHE. Indeed based on the above mentioned study, excluding the oxide based on rare and expensive metals, the electrochemically stable oxides under the most relevant PEFC conditions are limited to TiO₂, Nb₂O₅, Ta₂O₅, MoO₃, WO₂, GeO₂, SnO₂, Sb₂O₅, and Bi₂O₃.

Most of the work on oxide catalyst support has been performed on reduced oxides of titanium, such as the Magneli phase (Ti₄O₇) or Ebonex, which show lower band-gaps and higher conductivity than the stoichiometric TiO₂. However, the use of non-stoichiometric oxides, such as Ti₄O₇ or Ebonex, does not represent a better solution than the use of carbides or nitrides. Oxygen deficient-oxides can be definitively oxidized to their stoichiometric state at the typical fuel cell cathode conditions, resulting in a catalyst support with low electronic conductivity and also poor mechanical stability. It has been actually reported that Ebonex and Ti₄O₇ have limited electrochemical stability under an applied potential of 1.6 V vs. RHE in 0.5 M H₂SO₄ (J. Electrochem. Soc. 149, 2002, A1092). In contrast, the same authors showed that Nb-doped titanium oxide (Ti_{0.9}Nb_{0.1}O₂) is quite resistant to electrochemical and thermal oxidation.
Therefore, only oxide-based materials containing elements in their highest stable oxidation state cannot be subjected to further oxidation and, thus, they represent the most stable support materials for applications in fuel cell, electrolyzer, and metal-air battery oxygen electrodes.

The international patent application (WO 2010/135576 A2) claims to develop stable support based on Ti₁₋ₓMₓO₂, where M is a metal selected from tungsten, vanadium, niobium, tantalum, tin and ruthenium. All the above mentioned oxides in their high oxidation state represent n-type semiconductor (i.e. Ti is doped with an equal or higher valence element). Similarly, an even more recent patent application (WO 2011/108121 A1) deals with the use of Sb-doped tin oxide as fuel cell cathode support; i.e. doping Sn4+ with Sb5+ (higher valence element) leads to a n-type semiconductor.
In another recent patent application (WO 2010/033111 A1) oxide supports are claimed to be made of fluoride-doped metal oxide/phosphate.

It is therefore the aim of the present invention to provide a support material for application in fuel cell, metal-air battery, electrolyzer electrodes and sensors showing relative high surface area, good electrical conductivity as well as both high dissolution and electrochemical stability.

This aim is achieved according to the present invention by a support material for electrochemical applications, such as fuel cells, metal-air batteries, electrolyzer electrodes and sensors, having a composition of a semiconducting metal or transition metal oxide being doped with a lower valence element according to a general formula that is formulated as:
(M^{Y})₁₋ₓ(D^{Z})ₓO_{2-δ}, where M is a metal or transition metal in Y oxidation state and D represents the lower valence element with an oxidation state with Z<Y and δ represents the oxygen vacancies in the lattice and at the surface of the support material.

Doped metal or transition metal oxides represent best candidates as support materials because they provide both dissolution and electrochemical stability under the relevant conditions of oxygen electrode, as well as achieve high conductivity and high surface area.

Preferably, the metal or transition metal oxides are present in their highest stable oxidation state as corrosion stable support at high electrochemical stability further able to provide surface areas larger than 50 m² /g, adequate electrical conductivity and possibly also acting as a co-catalysts, leading, thereby, to an oxygen electrode material with excellent stability and activity.

Advantageously, the stable metal or transition metal support materials are applied for:
a) Oxygen reduction reaction (ORR) at the fuel cell cathode side; in this case electrochemical stability up to 1.5 V is required; and
b) Oxygen evolution reaction (OER) at the fuel cell anode side; in this case electrochemical stability up to at least 1.8 V is required.

In one aspect, the present invention provides porous oxide support for fuel cell operating in acidic conditions such as PEFC, while in another aspect the metal oxides are used as supports and/or catalysts in fuel cells operating in alkaline conditions.

For use in PEFC, the metal oxides must provide also adequate dissolution stability in acidic environment. Considering that cationic contaminations can exchange the proton sites in the ionomer and the membrane (resulting mainly in proton transport limitations) the dissolution of the metal oxide support must be excluded.

Preferably, the conductivity exceeds the values of 0.02 S/cm measured under typical PEFC oxygen electrode conditions, since the ionomer proton conductivity in the catalyst layer can be assumed to be ∼0.02 S/cm at 50%RH. Therefore without becoming the limiting factor, the electronic conductivity of the oxide electrode should be at least >0.02 S/cm under typical PEFC oxygen electrode conditions.

Most of the metal oxides of interest show semiconducting behavior, and thus high conductivity, when properly doped. Doping involves the addition of a different element into the semiconductor, i.e. substituting a group IV element (e.g. Si) with a group V element (e.g., P) or a group III element (e.g., Al). Doped semiconductors in which the dominant (or majority) of charge carriers are electrons are referred to as n-type semiconductors, whereas those in which holes are the majority charge carriers are referred to as p-type semiconductors.

The general formula for the claimed oxide support can be formulated as: (M^{Y})₁₋ₓ(D^{Z})ₓO_{2-δ} where M is a metal or transition metal in Y oxidation state and D represents the lower valence element (dopant) with an oxidation state Z<Y and δ represents the oxygen vacancies in the lattice and at the surface of the support material. Doping a stoichiometric binary oxide with a lower valence element, for example doping a MO₂ binary oxide with a D³⁺ element, leads to a p-type semiconductor and introduces oxygen vacancies in the host lattice for charge balancing according to Equ.2 (expressed in Kröger-Vink notation):

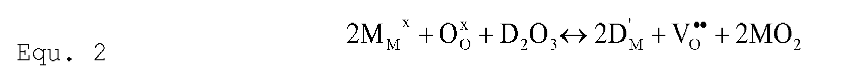

Therefore, semiconductors achieved by doping with a lower valence element can definitively present oxygen vacancies (δ) in their lattice and at the surface.

It has been reported that for partially oxidized tantalum carbonitrides increasing the amount of surface defects, i.e. oxygen vacancies, leads to an enhancement of catalytic activity towards oxygen reduction reaction (ORR) (Electrochimica acta 55, 2010, 7581). Therefore, the development of oxide supports with oxygen vacancy defects at the surface is expected to result in an oxygen electrode with advanced properties because the support itself contributes to the ORR or interacts with the noble metal catalysts reducing the electrode overpotentials.

The metal-oxide supports used in this invention not only act as inert support, but they can also act as advanced catalysts in alkaline conditions due to the present oxygen vacancies created by the use of dopants in a lower valence state compared to the host metal oxide.

To achieve adequate electrochemical stability under the oxidative condition present in an oxygen electrode, all the elements constituting the oxide semiconductors used as support will be in their highest stable oxidation state.
As an example, binary metal or transition metal oxides such as CeO₂, SnO₂, TiO₂, HfO₂, PbO₂, GeO₂ and SiO₂ can be doped with Sc₂O₃, Y₂O₃, La₂O₃, Bi₂O₃, Sm₂O₃, Gd₂O₃, Tb₂O₃, HO₂O₃, Tm₂O₃, Lu₂O₃, Al₂O₃, Ga₂O₃, Nd₂O₃, Yb₂O₃, Er₂O₃, BeO, MgO, CaO, ZnO, SrO, BaO, or CdO.

To achieve support oxides with high specific surface area, it is adequate to use wet chemistry synthesis method. This invention also reports an optimized synthesis and calcination method to achieve high surface area semiconducting oxides. Using a modified sol-gel method it is possible to achieve single-phase formation and microstructure control of the desired powders at reduced temperatures. Indeed, the sol-gel procedure reduces the diffusion path up to a nanometric scale, and thus requires lower calcination temperatures.

Preferred embodiments of the present invention are hereinafter described in more detail with respect to the attached drawings which depict in:
- Figure 1: Thermogravimetric curve for the Bi-doped SnO₂ powder precursor (a) and the impact of different annealing times (b);
- Figure 2: XRD patterns of Bi-doped SnO₂ powders annealed at 550 °C for 2 hours (upper graph) and 10 hours (lower graph);
- Figure 3: Pore size distribution obtained by BET measurements for 5 at% Bi-doped SnO₂ calcined at 550 °C for 2 hours in O₂;
- Figure 4: CV curves between 0.05 and 1.6 V vs Hydrogen Reference electrode (RHE) in 0.1 M HClO₄ saturated with Ar, at a scan rate of 50 mVs⁻¹ and at room temperature for Bi-doped and Vulcan X72 electrodes; and
- Figure 5: ORR current densities (capacity-corrected, negative-going scans) of GC substrate, and GC-supported SnO₂ and Bi-doped SnO₂ thin film electrodes at 1600 rpm in O₂ saturated 0.1 M HClO₄ at 5 mVs⁻¹.

In the following a process is described for the synthesis of 5 at% doped Bi-SnO₂ (BiSnO₂) which is referred to as Example 1. Chelation of cations is achieved by adding citric acid (CA) to the aqueous solution containing tin citrate and bismuth nitrate, respectively; ethylene glycol (EG) is added later in order to polymerize the organic precursor.

The aqueous tin citrate solution is prepared from SnCl₂ and CA with a CA:metal molar ratio of 3:1. Ammonia solution is added to the solution of tin citrate until a pH value of 4-5 is obtained in order to prevent tin citrate precipitation.

Aqueous solution of Bi citrate is prepared mixing Bi(NO₃)₃*5H₂O and CA with a CA:metal molar ratio of 3:1.

The aqueous Bi-citrate solution is added to the tin citrate solution in the appropriate amount to achieve a doping level of 5 at%. HNO₃ is added drop wise to the solution until a pH value of ∼1 is achieved.

EG is then added to the citrate solution at weight ratio of 40:60 with respect to CA. The solution is kept at 100 °C to evaporate the water and once a viscous gel is obtained, the gel is heated at about 150 °C for 24h to promote polymerization reaction.

### a) Thermogravimetric (TG) analysis

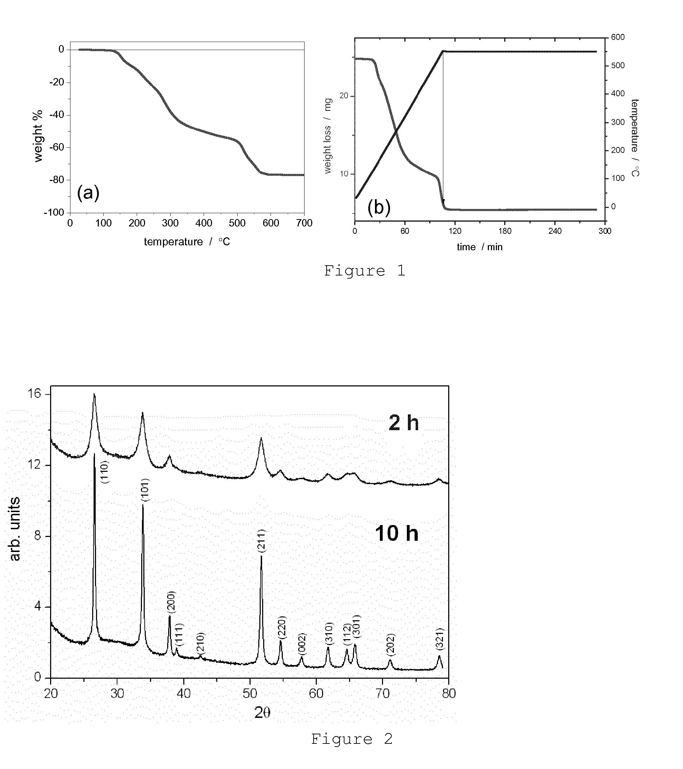

TG analysis is used to establish the calcination temperature needed to achieve single phase materials. Figure 1a shows the TG curve for the BiSnO₂ precursor. The main weight loss of about 75% occurred between 130 and 550 °C, due to the decomposition of the organic matrix. Therefore, the calcination temperature was fixed at 550 °C. As shown in Figure 1b, holding the temperature at 550 °C, after about 1 h constant weigh is observed.

### b) Annealing time

The annealing time of the powder precursor is an important parameter since it can determine the crystallinity of the material and also the grain size, i.e. long annealing times generally lead to powders with larger crystallites. Two annealing times, 2 and 10 hours, have been use to produce single phase BiSnO₂ oxides. Furthermore, the annealing is performed in O₂ atmosphere in order to achieve oxide powders with the cations in their highest stable oxidation state.

X-ray diffraction (XRD) analysis is performed to investigate the crystalline phase of the calcined oxides. The XRD patterns of BiSnO₂ calcined at 550 °C for 2 and 10 h (Figure 2) indicate that both the powders show a single, crystalline phase. The crystallite size of the BiSnO₂ powders obtained after annealing at 550 °C for 2 and 10 h are determined using the Scherrer equation. The BiSnO₂ powder annealed at 550 °C for 2 hours presents a crystallite size of 8.5 nm, while larger crystallites of 35 nm are obtained for the powder annealed at 550 °C for 10 hours. Therefore, the annealing time of 2 hours is beneficial to produce single phase powders with small crystallites.

### Example 2: Surface analysis by X-ray photoelectron spectroscopy (XPS)

XPS is used to determine the chemical surface composition of the BiSnO₂ powders obtained after annealing at 550 °C for 2 and 10 h. The results are shown in Table 1.

The 10 h annealing process leads to surface segregation of Bi at the surface, while a concentration of Bi closer to the theoretical one (5 at%) is obtained annealing the sample in O₂ at 550 °C for 2h, which therefore represent the optimized calcination condition. Furthermore, the analysis of the binding energy of the Bi 4f7/2 line confirms that Bi is incorporated with a 3+ oxidation state.

**Table 1**

| Annealing time at 550 °C for | Sn at% | Bi at% |
|---|---|---|
| 10 h | 80 | 20 |
| 2 h | 92 | 8 |

### Example 3: Determination of the Brunauer-Emmett-Teller (BET) surface area

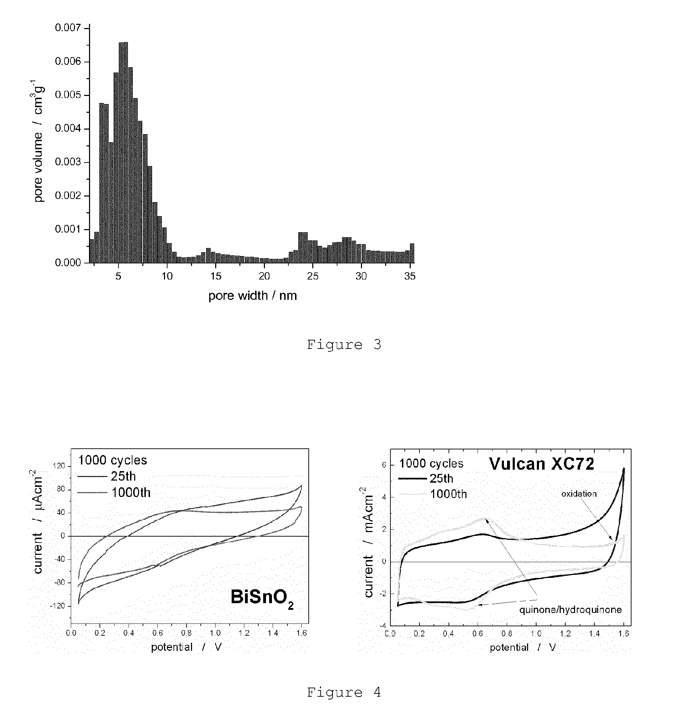

The specific surface of the semiconducting oxide supports is determined measuring the N₂ physisorption isotherms at 77 K, using Quantachrome Autosorb-1 machine. 10-20 mg of oxide are transferred into the measuring chamber and degassed overnight at 200°C. The specific surface area and the pore size distribution are determined using a multi-point BET analysis. The surface area measured for the 5 at% Bi-doped tin oxides calcined at 550 °C for 2h in O₂ is 55±5 m²g⁻¹, while typical pore size distribution is shown in Figure 3.

### Example 4: Determination of the electrochemical stability

a) The electrochemical stability under the most relevant PEFC cathode conditions is determined by cyclic voltammetry (CV) measurements. Electrochemical measurements are conducted in a three-electrode glass cell and using a rotator (Pine) to which the thin-film working electrode is attached. The thin-film electrodes were prepared from a suspension made of 75 mg of oxide, 100 µl of Nafion 117 and 25 ml of isopropanol. 30 µL of the above described suspension are spin coated on a glassy carbon rod of 5 mm in diameter and dried overnight under N₂ flowing. The electrode is immersed in 0.1M HClO₄ electrolyte saturated with pure Ar at room temperature and the measurements are performed using a hydrogen reference electrode (RHE) and a gold counter electrode in a three reference configuration.

Stability tests are performed over 1000 cycles between 50 mV and 1.6 V vs RHE using a scan rate of 50 mVs⁻¹. For comparison the same test is also performed on commonly used carbon for PEFC electrode (commercial Vulcan XC72).

Figure 4 shows the CV curves obtained for the BiSnO₂ and Vulcan XC72 electrodes. For the BiSnO₂ no new peaks evolved during cycling. Differently, a strong decrease of the peak at about 1.5 V is observed for the Vulcan XC72 indicating oxidation of the carbon support. Furthermore, during potential cycling of the Vulcan XC72 two redox peaks at about 0.55 and 0.6 V vs RHE appear indicating oxidation of the carbon surface, i.e. formation of quinone/hydroquinone species.

Table 2 reports the charge calculated for the 25^{th} and the 1000^{th} cycle between 50 mV and 1 V, for both BiSnO₂ and Vulcan XC72 electrodes. After the stability test, the charge associated to the Vulcan XC72 CV increased of about 19% due to the formation of the quinone/hydroquinone species, while for BiSnO₂ mostly no change in the charge has been observed.

**Table 2**

| | Vulcan XC72 | BiSnO₂ |
|---|---|---|
| Charge 25th cycle | 24.5 µCcm_{carbon}⁻² | 48.2 µCcm_{oxide}⁻² |
| Charge 1000th cycle | 29.1 µCcm_{carbon}⁻² | 48.6 µCcm_{oxide}⁻² |
| Charge increase after stability test | + 19% | 0.8% |

b) Corrosion stability under applied potential is tested holding the thin film electrodes described in Example 4.a at 1.6 V vs RHE for 30 minutes. The thin film electrodes are immersed in 0.1M HClO₄ electrolyte saturated with pure Ar at room temperature and the measurements are performed using a hydrogen reference electrode (RHE) and a gold counter electrode in a three reference configuration. After holding BiSnO₂ and Vulcan XC72 electrodes at 1.6 V vs RHE a steady state current of 109 nA/cm² (current normalized by the surface area of the electrode) is observed for the Vulcan XC72 electrode, while for the BiSnO₂ the steady state current normalized by the oxide surface area is almost 1 order of magnitude lower (17 nA/cm²). The significant difference in the steady state current at constant applied voltage indicates that a further faradaic reaction occurs on the Vulcan XC72 surface, i.e. carbon oxidation reaction (Equ.1).

### Example 5: Determination of the oxygen reduction reaction (ORR) activity in acidic media

The ORR is determined by rotating disk measurements (RDE) measurements. RDE measurements are conducted in a three-electrode glass cell and using a rotator (Pine) to which the RDE thin-film working electrode is attached. The thin-film electrodes are prepared from a suspension made of 75 mg of oxide, 15 mg of acetylene black (Alfa Aesar), 100 µl of Nafion 117, and 25 ml of isopropanol. 20 µl of the above described suspension are spin coated on a glassy carbon rod of 5 mm in diameter and were dried overnight under N₂ flowing. The electrode is immersed in 0.1M HClO₄ at room temperature and the measurements are performed using a hydrogen reference electrode (RHE) and a Au counter electrode in a three reference configuration.

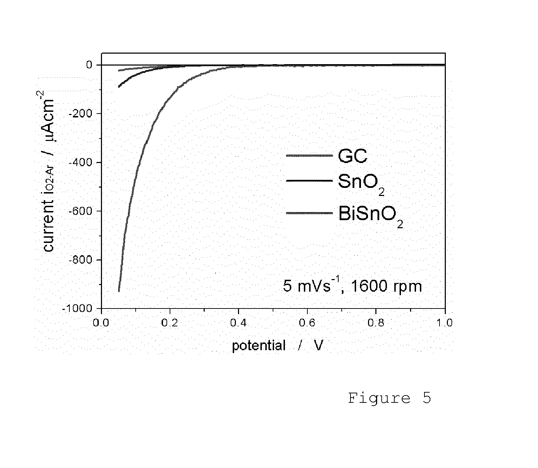

All the potentials are corrected by the ohmic drop determined by high frequency ac impedance spectroscopy. ORR activities are obtained from the negative-going scans at 5 mVs⁻¹ in O₂-saturated 0.1 M HClO₄ at 1600 rpm and corrected for capacitive currents obtained by negative-going scan in Ar-saturated 0.1 M HClO₄. For comparison the ORR current in the same condition has been also measured for the bare glassy carbon (GC) substrate and undoped tin oxide showing similar surface area than BiSnO₂; the results are shown in Figure 5.

BiSnO₂ shows higher ORR current than both the bare glassy carbon (which can be considered as background current) and the undoped SnO₂, indicating that the Bi doping indeed enhanced the activity of tin dioxide towards ORR. Table 3 compares the onset of ORR taken at constant current density of 10 µA/cm² for the glassy carbon, SnO₂ and Bi-doped SnO₂.

**Table3**

| | Onset (V vs RHE) for ORR at constant current density of 10 mA/cm² |
|---|---|
| Glassy carbon | 0.13 V |
| SnO₂ | 0.19 V |
| Bi-doped SnO₂ | 0.37 V |

### Example 6: Determination of the electrochemically stability of semiconductor oxide/Pt electrodes

The electrochemical stability of oxide semiconductor/Pt electrodes is tested by simulating automotive start and stop cycles of an operating fuel cell. The working electrode is prepared first spin coating on a glassy carbon substrate the oxide suspension described in Example 4.a and then depositing 50 µg/cm² of Pt by sputtering on top of the porous oxide film. The sputtering conditions are the same described in Chimia 66, 2012, 110. The working electrode is cycled between 0.5 and 1.5 V vs RHE for 1000 times at 50 mVs⁻¹ in Ar-saturated 0.1 M HClO₄ at room temperature.

Cyclic voltammetry measurements are performed before and after the stability test in order to evaluate changes in the Pt electrochemical surface area. For comparison, the same stability test was also performed on the catalyst made of 50 µg/cm² of Pt sputtered on acetylene black (AB) carbon (surface area of 80 m²/g). The so-called hydrogen underpotential deposition is used to determine Pt surface area before and after the stability test. For the calculation of the Pt surface area, a specific charge of 210 µC/cm² for the adsorption of one monolayer of hydrogen on an atomically flat polycrystalline Pt electrode is used. The results are shown in Table 4; no significant change of the Pt electrochemical surface area is observed after the start/stop stability test for the BiSnO₂/Pt catalyst, while a significantly larger decrease in surface area occurred for the AB/Pt catalyst.

**Table 4**

| Stability test | BiSnO_{2/}Pt catalyst (cm²_{Pt}/cm²) | AB/Pt catalyst (cm²_{Pt}/cm²) |
|---|---|---|
| before | 1.54 | 3.16 |
| after | 1.32 | 2.22 |
| % change Pt surface area | -12 % | -42 % |

Beside the Bi-doped SnO₂ support material which has been described in detail above, the following material pairs have shown best prospects for alkaline applications:
a) Fe or Co or Ni-doped Ti02;
b) Cd or Ca-doped Co2O3;
c) Co or Fe or Ni-doped Sn02
d) Co or Fe or Ni-doped Pb02
e) Gd or Sm or Y-doped CeO2

Further, some investigations have been made for applications in acidic environments. Suitable material pairs can be:
a) Bi-doped Ge04
b) Bi-doped Hf04
c) Bi-doped Pb04.

## Claims

1. Support material for electrochemical applications, such as fuel cells, metal-air batteries, electrolyzer electrodes and sensors, having a composition of a semiconducting metal oxide being doped with a lower valence element according to a general formula that is formulated as:
(M^{Y})₁₋ₓ(D^{Z})ₓO_{2-δ}, where M is a metal or transition metal in Y oxidation state and D represents the lower valence element with an oxidation state with Z<Y and δ represents the oxygen vacancies in the lattice and at the surface of the support material.

2. Support material according to claim 1, wherein the metal oxide is present in its highest stable oxidation state.

3. Support material according to claim 1 or 2, wherein the BET surface area is larger than 50 m² /g.

4. Support material according to any of the preceding claims, wherein the metal oxide doped with the lower valence element provides adequate electrical conductivity in relation to the desired electrochemical application.

5. Support material according to claim 4, wherein the electrical conductivity exceeds the values of 0.02 S/cm.

6. Support material according to any of the preceding claims, wherein the metal or transition metal oxides is selected from a group containing CeO₂, SnO₂, TiO₂, HfO₂, PbO₂, GeO₂ and SiO₂.

7. Support material according to any of the preceding claims, wherein the lower valence element is selected from a group of oxides containing Sc₂O₃, Y₂O₃, La₂O₃, Bi₂O₃, Sm₂O₃, Gd₂O₃, Tb₂O₃, Ho₂O₃, Tm₂O₃, Lu₂O₃, Al₂O₃, Ga₂O₃, Nd₂O₃, Yb₂O₃, Er₂O₃, BeO, MgO, CaO, ZnO, SrO, BaO, or CdO, selection is made under the pre-requisite of the lower oxidation state as compared to the metal or transition metal oxide.

8. Support material according to any of the preceding claims, wherein the metal or transition metal oxide and the lower valence element or its oxide respectively are prepared by a wet chemistry synthesis and hardened under calcination.

9. Support material according to claim 8, wherein a sol-gel method is applied to achieve a single-phase formation and microstructure control of the desired powders at reduced temperatures as compared to other procedures for oxide mixing and calcination.

10. Support material according to any of the preceding claims, wherein the metal oxide is SnO₂ and the lower valence element is Bi; together forming a doped Bi-SnO₂ compound.

11. Polymer electrolyte fuel cell, electrolyzer, metal-air battery or sensor comprising in its electrode a support material according to any of the claims 1 to 10.
